**Europäisches Patentamt**

**European Patent Office**

**Office européen des brevets**

(19)

(11) Veröffentlichungsnummer : **0 152 627**
**B1**

(12) **EUROPÄISCHE PATENTSCHRIFT**

(45) Veröffentlichungstag der Patentschrift :
08.07.87

(21) Anmeldenummer : 84116356.1

(22) Anmeldetag : 27.12.84

(51) Int. Cl.⁴ : **B 60 T   8/32**, B 60 K  28/16

(54) **Bremsanlage für Fahrzeuge.**

(30) Priorität : 10.01.84 DE 3400566

(43) Veröffentlichungstag der Anmeldung :
28.08.85 Patentblatt 85/35

(45) Bekanntmachung des Hinweises auf die Patenterteilung : 08.07.87 Patentblatt 87/28

(84) Benannte Vertragsstaaten :
CH DE GB IT LI SE

(56) Entgegenhaltungen :
EP-A- 0 002 073
DE-A- 2 545 593
DE-A- 3 215 739
US-A- 4 460 220

(73) Patentinhaber : ROBERT BOSCH GMBH
Postfach 50
D-7000 Stuttgart 1 (DE)

(72) Erfinder : Goebels, Hermann-Josef, Ing.(grad).
Alte Vaihingerstrasse 23
D-7141 Schwieberdingen (DE)
Erfinder : Frank,Rüdiger,Dr.Dipl.-Phys.
Ulmenweg 7
D-5040 Brühl (DE)

## Beschreibung

Die Erfindung geht aus von einer Bremsanlage nach der Gattung des Hauptanspruchs.

Eine derartige Bremsanlage ist bekannt (DE-A-32 15 739). Dieser bekannten Bremsanlage liegt das Problem zugrunde, die Kombination von Blockierschutzeinrichtung und Antriebsschlupfschutz mit möglichst einfachen Mitteln durchzuführen. Für den Antriebsschlupfschutz können auf jeden Fall die Drehzahlfühler, die Drucksteuerventile und wesentliche Funktionsblöcke des elektronischen Steuergeräts der Blockierschutzeinrichtung mitverwendet werden. Bei der bekannten Bauart werden zum Umschalten besondere Magnetventil benötigt.

### Vorteile der Erfindung

Die eingangs genannte Bremsanlage mit den kennzeichnenden Merkmalen des Hauptanspruchs hat demgegenüber den Vorteil, daß die Umschaltelemente in ihrem Aufbau besonders einfach sind und dadurch keine zusätzlichen, elektrischen Schaltungsmaßnahmen erforderlich sind.

Gemäß verschiedener Merkmale der Unteransprüche besteht eine vorteilhafte Weiterbildung der Bremsanlage auch in ihrer Anwendbarkeit bei Fahrzeugen, bei denen ein Blokkierschutz-Drucksteuerventil ein angetriebenes und ein oder auch mehrere, nahe beieinander liegende nicht angetriebenes Rad oder Räder gemeinsam überwacht (en). Das Problem liegt dabei darin, daß bei eingeschaltetem Antriebsschlupfschutz das Mitbremsen der nicht angetriebenen Räder verhindert werden muß, um nicht die Zugkraft des Fahrzeugs unnötig zu reduzieren.

### Zeichnung

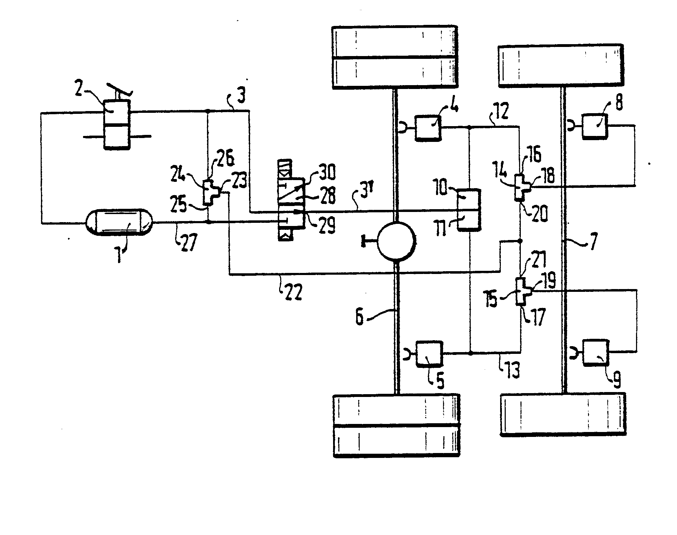

Ein Ausführungsbeispiel der Erfindung ist in der Zeichnung dargestellt und in der nachfolgenden Beschreibung näher erläutert.

### Beschreibung des Ausführungsbeispieles

An einen Vorratsbehälter 1 ist ein Bremsventil 2 angeschlossen, von dem aus eine Bremsleitung 3 zu den Radbremszylindern 4 und 5 einer Antriebsachse 6 führt. Dieser Antriebsachse 6 ist eine antriebslose Mitlaufachse 7 beigeordnet, deren Räder ebenfalls mit zwei Radbremszylindern 8 und 9 ausgerüstet ist. Es ist auch möglich, mehrere Mitlaufachsen als Vor- oder Nachlaufachsen zu überwachen.

Die Bremsanlage weist eine Blockierschutzeinrichtung mit Radsensoren, Drucksteuerventilen und elektronischer Schalteinrichtung auf, von denen lediglich zwei Drucksteuerventile 10 und 11 dargestellt sind, die in die Bremsleitung 3 vor den Radbremszylindern 4 und 5 eingesetzt sind.

Je ein, Radbremszylinder 8 und 9 der Mitlaufachse 7 versorgender Bremsleitungszweig 12 bzw. 13 verläuft von dem Radbremszylinder 4 bzw. 5 über je ein Zweiwegeventil 14 bzw. 15 zu den Radbremszylindern 8 und 9. Zu diesem Zweck hat jedes Zweiwegeventil 14 bzw. 15 einen Eingang 16 bzw. 17 und einen Ausgang 18 bzw. 19. Je ein zweiter Eingang 20 bzw. 21 der Zweiwegeventile 14 und 15 hat Verbindung mit einer Steuerleitung 22, die von einem Ausgang 23 eines dritten Zweiwegeventils 24 herangeführt ist. Je ein Eingang 25 bzw. 26 dieses Zweiwegeventils 24 liegt auf der Seite des Vorratsbehälters 1 bzw. des Bremsventils 2.

Vom Vorratsbehälter 1 führt eine Vorratsleitung 27 einerseits zum Eingang 25 des Zweiwegeventils 24 und andererseits zu einem 3/2-Wege-Magnetventil 28 als Umschaltventil, über das auch die Bremsleitung 3 geleitet ist. Ein Ausgang 29 ist über eine Bremsleitung 3' mit den beiden Drucksteuerventilen 10 bzw. 11 verbunden, und ein Ausgang 30 des Umschaltventils 28 führt zur Außenluft.

### Wirkungsweise

Bei einer normalen Bremsung gelangt Druckluft aus dem Vorratsbehälter 1 über das Bremsventil 2, über das Umschaltventil 28 und über die Bremsleitung 3' zu den Drucksteuerventilen 10 und 11. Da diese offen sind, strömt die Druckluft ungehindert in die Bremszylinder 4 und 5 der Antriebsachse 6.

Der Bremsdruck steht auch an den Eingängen 16 und 17 der Zweiwegeventile 14 und 15 an. Diese Zweiwegeventile 14 und 15 wie auch das Zweiwegeventil 24 sind so ausgebildet, daß immer der niedrigere, an den beiden Eingängen anstehende Druck « Durchgang » hat. Bei gleichen Drücken an beiden Eingängen wird der Druck am Ausgang auf gleichem Niveau ausgesteuert. Die Funktion der Zweiwegeventile 14, 15 und 24 ist somit wie die von UND-Gliedern, sie geben nur dann einen Leitungsdruck weiter, wenn an beiden Eingängen Druck ansteht.

Auf diese Weise wird also beim Bremsen in die Steuerleitung 22 der Druck unmittelbar vom Bremsventil 2 eingesteuert, er steht dann an den Eingängen 20 und 21 der Zweiwegeventile 14 und 15 an. Der über die Bremsleitungszweige 12 und 13 herangeführte Bremsdruck ist niedriger oder auf dem gleichen Niveau, so daß er von den Eingängen 16 und 17 zu den Ausgängen 18 und 19 gelangt und in die Radbremszylinder 8 und 9 strömt. Alle Räder werden gebremst.

Wenn die Blockierschutzeinrichtung arbeitet und z. B. der Bremsdruck in dem Radbremszylinder 5 abgesenkt wird, führt dies automatisch zur gleichen Druckabsenkung in dem Radbremszylinder 9, weil das niedrigere Druckniveau auch in Rückströmrichtung Durchgang hat.

Wird jedoch über die Radsensoren der Antriebsschlupfschutz eingeschaltet, so schaltet das Umschaltventil 28 in seine andere Stellung. Druck aus dem Vorratsbehälter 1 gelangt über die Bremsleitung 3' und über die Drucksteuerventile 10 und 11 in die Radbremszylinder 4 und 5 der Antriebsachse 6.

Die Bremsleitung 3 vom Bremsventil 2 bleibt dabei drucklos, deshalb sperren die Zweiwegeventile 24, 14 und 15 den nur einseitig anstehenden Druck. Die Mitlaufachse 7 wird nicht gebremst.

Hier soll noch bemerkt werden, daß eine Antriebsschlupfschutz-Einrichtung für eine Zusammenfassung von Antriebsachse und Mitlaufachse auch möglich ist mit Hilfe von zwei 2/2-Wege-Magnetventilen, von denen je eines seitenweise in eine Verbindungsleitung zwischen einem Radbremszylinder der Antriebsachse und einem Radbremszylinder der Mitlaufachse eingesetzt ist. Beim Einschalten des Antriebsschlupfschutzes wird mit Hilfe des 2/2-Wege-Magnetventils die Verbindung zum Radbremszylinder der Mitlaufachse geschlossen, um das Mitbremsen des nicht angetriebenen Rades zu verhindern.

Eine solche Einrichtung mit Magnetventilen kann auch mit den druckabhängigen Zweiwegeventilen kombiniert werden. Jedoch hat die Verwendung vom Magnetventilen den Nachteil, daß zusätzliche elektrische Leitungen und auch zusätzliche Schaltmittel in der elektronschen Schalteinrichtung vorgesehen sein müssen.

## Patentansprüche

1. Bremsanlage für Fahrzeuge, insbesondere für Nutzkraftfahrzeug, mit einer Antriebsachse und mit mindestens einer Mitlaufachse die eine Blockierschutzeinrichtung mit Radsensoren, elektronischer Schalteinrichtung sowie in zu den Radbremsen führenden Bremsleitungen eingesetzte Drucksteuerventile haben und die außerdem mit einem Antriebsschlupfschutz (ASR) ausgerüstet sind, dadurch gekennzeichnet, daß bei Anwendung bei Fahrzeugen mit einer Antriebsachse und mit mindestens einer Mitlaufachse Schaltmittel (24, 14, 15) verwendet sind, von denen eines (24) zwischen einem Bremsdruckgeber (2) und einem Vorratsbehälter (1) in einer Steuerleitung (22) angeordnet ist, die zu den anderen Schaltmitteln (14, 15) geführt ist, daß ferner die anderen Schaltmittel (14, 15) in je einer Verbindungsleitung (12 bzw. 13) zwischen dem Radbremszylinder (4 bzw. 5) der Antriebsachse (6) und dem Radbremszylinder (8 bzw. 9) der benachbarten Mitlaufachse (7) angeordnet sind und daß bei Normalbremsung und bei der Arbeit der Blockierschutzeinrichtung diese Schaltmittel (14, 15, 24) auf Durchgang stehen und bei der Arbeit des ASR auf Sperrstellung bringbar sind.

2. Bremsanlage nach Anspruch 1, dadurch gekennzeichnet, daß die Schaltmittel (14, 15, 24) druckabhängig steuerbare Zweiwegeventile sind.

3. Bremsanlage nach Anspruch 2, dadurch gekennzeichnet, daß jedes Zweiwegeventil (14, 15, 24) zwei Eingänge und einen Ausgang hat und Druck nur durchläßt, wenn dieser an beiden Eingängen ansteht, und daß der Ausgangs-Druck der jeweils niedrigere oder bei gleichen Eingangsdrücken einer der beiden Eingangsdrücke ist.

4. Bremsanlage nach Anspruch 2 oder 3, dadurch gekennzeichnet, daß auf jeder Fahrzeugseite für eine Kombination von Antriebsachse (6) und Mitlaufachse (7) ein Zweiwegeventil (14 bzw. 15) eingesetzt ist, dessen einer Eingang (16 bzw. 17) an die Bremsleitung (3, 3') des Antriebsachsen-Radbremszylinders (4 bzw. 5) und dessen anderer Eingang (20 bzw. 21) an den Ausgang (23) des zwischen der Druckquelle (Vorratsbehälter 1) und dem Bremsdruckgeber (Bremsventil 2) liegenden Zweiwegeventils (24) angeschlossen ist und dessen Ausgang (18 bzw. 19) zu dem oder den Mitlaufachsen-Bremszylinder(n) (8 bzw. 9) geführt ist.

## Claims

1. Braking system for vehicles, in particular for commercial motor vehicles, having a driving axle and having at least one idling axle which have an antilock device with wheel sensors, an electronic switching device as well as pressure-control valves inserted in brake lines leading to the wheel brakes and which are also equipped with an antislip system for the drive, characterized in that, when vehicles are used which have one driving axle and at least one idling axle, switching means (24, 14, 15) are used, of which one (24) is arranged between a brake-pressure transmitter (2) and a reservoir (1) in a control line (22) which leads to the other switching means (14, 15), in that, moreover, the other switching means (14, 15) are each arranged in a connecting line (12 and 13 resp.) between the wheel brake cylinder (4 and 5 resp.) of the driving axle (6) and the wheel brake cylinder (8 and 9 resp.) of the adjacent idling axle (7), and in that, during normal braking and when the antilock device is working, these switching means (14, 15, 24) are set for passage of pressure and, when antislip for the drive is working, they can be brought into the blocking position.

2. Braking system according to Claim 1, characterized in that the switching means (14, 15, 24) are two-way valves which can be controlled as a function of pressure.

3. Braking system according to Claim 2, characterised in that each two-way valve (14, 15, 24) has two inlets and one outlet and only allows pressure through when the latter is present at both inlets, and in that the outlet pressure is in each case the lower of the two inlet pressures or, when the two inlet pressures are the same, one of the two inlet pressures.

4. Braking system according to Claim 2 or 3, characterized in that, on each vehicle side, for a combination of driving axle (6) and idling axle (7), a two-way valve (14 and 15 resp.) is inserted, one inlet (16 and 17 resp.) of which is connected to the brake line (3, 3') of the wheel brake cylinder (4 and 5 resp.) of the driving axle, and its other inlet (20 and 21 resp.) is connected to the outlet (23) of the two-way valve (24) located between the pressure source (reservoir 1) and the brake-pressure transmitter (brake valve 2), and its outlet (18 and 19 resp.) is led to the brake cylinder(s) (8 and 9 resp.) of the idling axle.

## Revendications

1. Installation de frein pour véhicules notamment pour véhicules utilitaires comportant un essieu-moteur et au moins un essieu libre, installation comportant un dispositif anti-blocage avec des capteurs de roue, un circuit électronique ainsi que des soupapes de commande de pression montées dans les conduites de freinage aboutissant aux freins des roues, et équipé en outre d'une protection de glissement d'entraînement (ASR), installation caractérisée en ce que dans l'application des véhicules avec un essieu-moteur et au moins un essieu libre, elle comporte des moyens de commutation (24, 14, 15) dont l'un (24) est monté entre un capteur de pression de frein (2) et un réservoir d'alimentation (1) dans une conduite de commande (22) allant vers les autres moyens de commutation (14, 15), et en ce qu'en outre les autres moyens de commutation (14, 15) sont montés respectivement dans une conduite de liaison (12, 13) entre le cylindre de frein de roue (4, 5) de l'essieu-moteur (6) et le cylindre de frein de roue (8, 9) de l'essieu libre (7), voisin, et en ce qu'en freinage normal et lorsque le dispositif de protection de blocage fonctionne, ces moyens de commutation (14, 15, 24) sont passants et lorsque le système (ASR) fonctionne, ils sont susceptibles d'être mis en position de blocage.

2. Installation de frein selon la revendication 1, caractérisée en ce que les moyens de commutation (14, 15, 24) sont des tiroirs à deux voies commandés en fonction de la pression.

3. Installation de frein selon la revendication 2, caractérisée en ce que chaque tiroir à deux voies (14, 15, 24) comporte deux entrées et une sortie et n'est passant en pression que si cette pression est appliquée aux deux entrées, et en ce que la pression de sortie de la pression d'entrée la plus faible ou dans le cas de pressions d'entrée identiques, est l'une des deux pressions d'entrée.

4. Installation de frein selon la revendication 2 ou 3, caractérisée en ce que de chaque côté du véhicule, il est prévu un tiroir à deux voies (14, 15) pour combiner l'essieu-moteur (6) et l'essieu libre (7), tiroir dont une entrée (16, 17) est reliée à l'installation de frein (3, 3') du cylindre de frein de roue de l'essieu-moteur (4, 5) et dont l'autre entrée (20, 21) est reliée à la sortie (23) du tiroir à deux voies (24) prévu entre la source de pression (réservoir d'alimentation 1) et le générateur de pression de freinage (soupape de frein 2) et sa sortie (18, 19) aboutit au(x) cylindre(s) de frein de l'essieu libre (8, 9).